# EUROPEAN PATENT APPLICATION

(11) **EP 1 035 386 A2**
(43) Date of publication of application: **13.09.2000**
(21) Application number: 00650018.5
(22) Date of filing: 12.03.2000
(51) Int. Cl.: F24F 11/00

(54) **A ventilation system**

(30) Priority: 12.03.1999 IE 990206
(71) Applicant: O'Gorman, Patrick Joseph, Portlaoise, County Laois (IE)
(72) Inventor: O'Gorman, Patrick Joseph, Portlaoise, County Laois (IE)
(74) Representative: Weldon, Michael James

(57) **Abstract**

An animal house (1) has an inlet duct (10) which provides fresh air to a room (7). The air is drawn by an exhaust fan (20) in a side wall (2). In a winter mode, the air source is an attic space (6) via an opening (13) in the duct (10). In a summer mode, the source is the external environment via an opening (16).

## Description

The invention relates to a ventilation method, a ventilation system, and to an animal house incorporating a ventilation system.

For animal husbandry, it is very important that the correct environmental conditions are provided for healthy rearing of animals. The most important parameters for providing the correct environmental conditions are temperature within the house, air quality, and air velocity.

Regarding temperature, the values required for animals at different stages of development are well known and allow little tolerance. Regarding air quality, it is important that good quality fresh air be introduced with a high throughput to minimise NH3, air humidity, carbon dioxide, and dust. Regarding air velocity, it is accepted that a velocity of less than 0.4 meters per second is required to avoid draught induced stress in the animals.

Unfortunately, these requirements are often conflicting. For example, in many locations it is often very difficult to provide fresh air without an excessive air velocity and with accurate temperature control. A typical approach to addressing this problem is to provide complex fan and baffle arrangements, however, even such arrangements often do not operate satisfactorily.

The invention is therefore directed towards addressing these problems in a simple and effective manner.

According to the invention, there is provided an animal house ventilation system comprising:-
an inlet for delivery of fresh air into a room,
an exhaust outlet for delivery of used air to the environment, and
a fan means for drawing air through the inlet and the exhaust, characterised in that,
the inlet comprises:-
   means for drawing fresh air from a fresh air store source,
   means for drawing fresh air from an external source outside of the house, and
   valve means for controlling the fresh air sources.

Thus, the inlet may draw fresh air from the store when low ventilation rates are required such as in the colder months. The fresh air store effectively buffers the animal room from the effects of the external environmental conditions such as wind gusts. At the same time, the air is of equally good quality. When higher ventilation rates are required, the air may be drawn directly from outside. Thus, optimum internal environmental control may be achieved.

In one embodiment, said means for drawing fresh air from a fresh air store comprises a duct having an attic space opening for location in an attic space.

In another embodiment, the duct further comprises an external opening for location outside the house, and the valve means comprises means for controlling the extent of fresh air flow from the attic space and through the external opening.

In one embodiment, the duct comprises means for mounting in a substantially vertical position with the external opening at an upper end, the attic space opening between the ends, and an internal opening at a lower end for delivery of fresh air into the house.

In a further embodiment, the inlet comprises a diffusion plate mounted to direct air in a generally horizontal direction and a one-way flap to prevent upward escape of internal air through the inlet.

In one embodiment, the fan is mounted in the exhaust outlet.

According to another aspect, the invention provides an animal house comprising a room for housing animals, an attic space above the room, and a ventilation system, characterised in that,
the ventilation system comprises an inlet comprising:-
means for drawing fresh air from the attic space,
means for drawing fresh air from outside of the house, and
valve means for controlling fresh air flow to the room from the attic space and from outside.

In one embodiment, the inlet comprises a vertically-mounted duct having an upper opening for drawing fresh air from outside, an intermediate opening for drawing fresh air from the attic space, and a lower opening for delivery of fresh air into the room.

In another embodiment, the ventilation system further comprises an exhaust fan mounted in a side wall or a floor of the animal house.

According to a further aspect, the invention provides a method of ventilating an animal house comprising the steps of monitoring internal temperature, and:-
for a low temperature range, drawing fresh air from a fresh air store which is replenished by diffuse flow into the store, and
for a high temperature range, drawing fresh air from the external environment.

In one embodiment, the fresh air is drawn from an attic space for the low temperature range.

In one embodiment, the ventilation flow rate is lower for the low temperature range than for the high temperature range, and the air is heated by a diffusion plate as it enters the room.

The invention will be more clearly understood from the following description of some embodiments thereof, given by way of example only with reference to the accompanying drawings in which:-
Fig. 1 is a diagrammatic cross-sectional elevational view of an animal house of the invention with a ventilation inlet in a winter operating mode;
Fig. 2 is a diagrammatic cross-sectional elevational view showing the ventilation inlet in a summer operating mode; and
Figs. 3 and 4 are plots illustrating ventilation parameter relationships.

Referring to the drawings, there is shown an animal house 1 comprising side walls 2, pig pens 3, a ceiling 4, and a roof 5 defining an attic space 6. The attic space 6 has a volume of approximately one third that of a housing room 7 defined by the walls 2 and the ceiling 4.

A ventilation system comprises an inlet duct 10 over which there is a baffle 11 for external fresh air flow into an upper, external opening 16. The duct 10 comprises a valve flap 12, in this embodiment controlled by a manual handle and pulley mechanism (not shown). However, the flap may alternatively be driven by a motor under automatic control according to temperature sensing. The flap 12 is mounted above an attic space opening 13 for flow of fresh air from the attic space 6. At its lower end, the duct 10 comprises an internal opening 17 for delivery of inlet fresh air against a heated diffusion plate 14 in the room 7. The gap between the edges of the diffusion plate 14 and the ceiling 4 includes one-way flaps 15 which allow air flow into the room 7, but prevent rising air in the room from flowing upwardly into the duct 10.

The ventilation system also comprises an exhaust fan 20 mounted in an exhaust opening in a wall 2, and external louvres 21 outside of the fan 20.

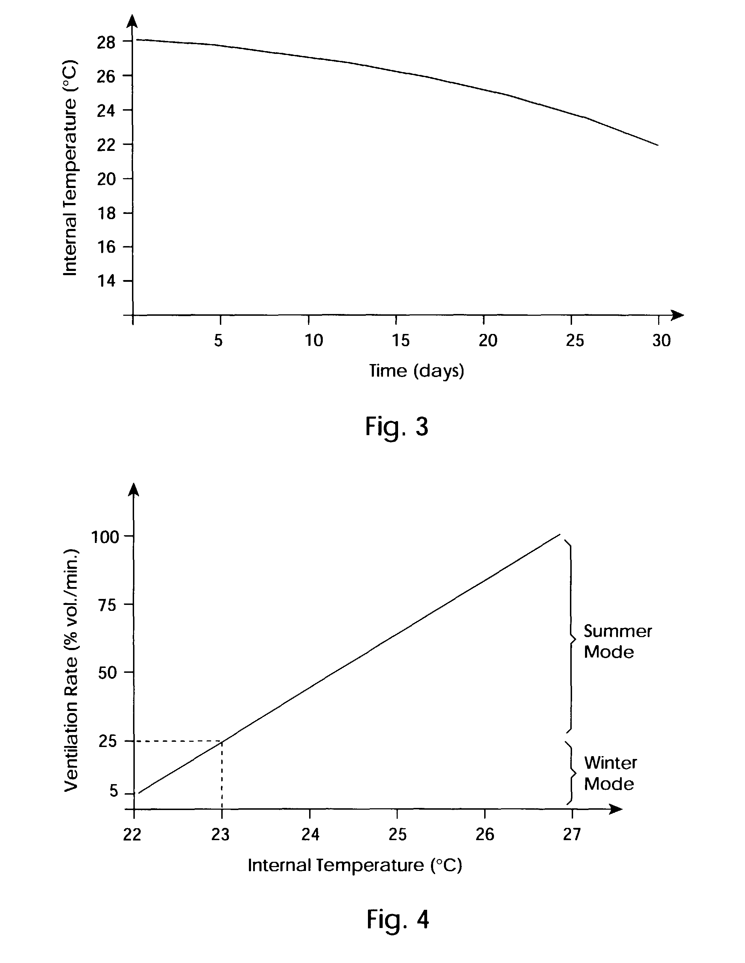

In operation, the ventilation system controls ventilation (flow) rate and temperature to provide a controlled environment for pig weaners as set out in the plot of Fig. 3. As illustrated, the desired temperate for newborns is 28°C and this decreases gradually to c.22°C over a 28 day period. As shown in Fig. 4, the ventilation rate and the internal temperature are directly related. The system has a "winter" mode of operation for a low temperature range of 22°C to 23°C (ventilation rate of 5% to 25%) and a "summer" mode for a high temperature range of 23°C to 27°C (ventilation rate of 25% to 100%).

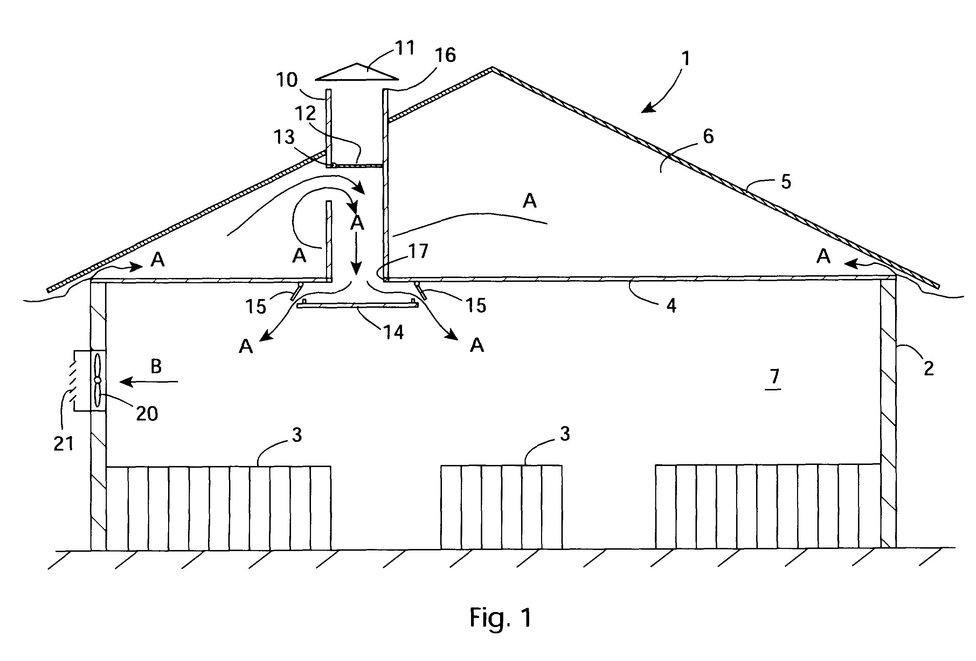

The winter mode is shown in Fig. 1. In this mode, the flap 12 closes off the external opening 16, and so the exhaust fan 20 draws fresh air from inside the attic space 6 as indicated by the arrows A (inlet) and B (exhaust). This air is replenished by a small-scale diffuse flow under the roof eaves. For a ventilation rate of 5% the attic space air is replenished once every approximately seven minutes. For a ventilation rate of 25%, the diffuse flow increases to replenish the attic space approximately once every 1.3 mins. These flows are on the basis of the attic space having approximately one-third of the volume of the room 7.

This dwell time in the attic space 6 typically allows the air temperature to increase by 1°C to 3°C in the colder months of the year. Also, because the fresh air is being drawn from a store (the attic space 6), the weather conditions do not affect the flow. Thus, for example, gusts of wind have no effect on inlet flow and much more precise control than heretofore is achieved. Because of this, the system can prevent draughts of greater than 0.4 m/s from arising in the room 7, while at the same time achieving excellent temperature control from a combination of control of the heaters on the diffusion plate 14 and the flap 12.

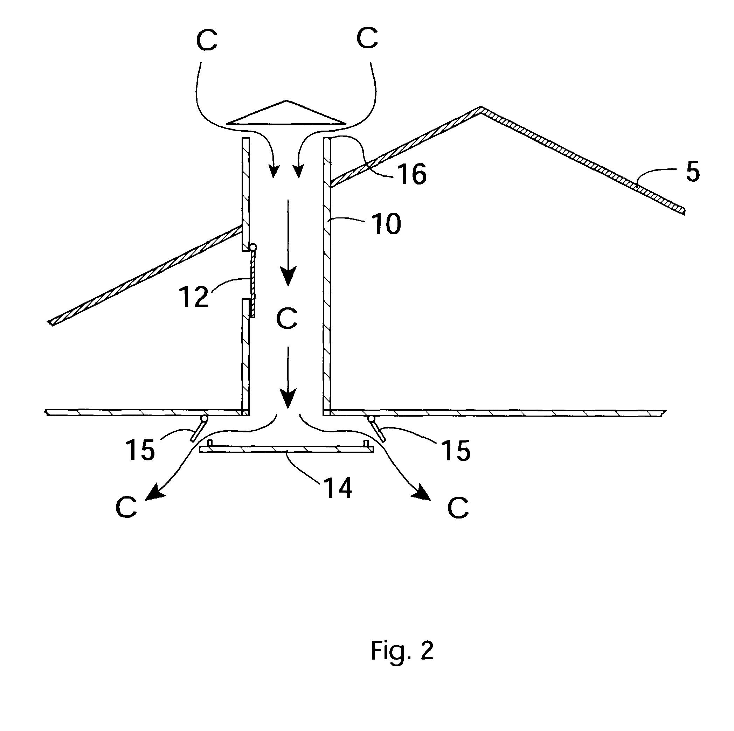

In the summer mode, as shown in Fig. 2, the flap 12 closes the opening 13 and allows the fan 20 to draw air in through the external opening 16. This provides the capacity for the relatively high ventilation rates in the higher range of Fig. 4. The air flow is indicated by the letters C. For these ventilation rates, ambient weather conditions have much less impact and indeed high ambient wind gusts are generally less frequent in the warmer months of the year.

Thus, the invention provides optimised ventilation by making use of an inherent fresh air store, namely the attic space. Of course, if such a space is not available, a tank or container with sufficient volume and diffuse air inlets may be provided for the purpose. The invention allows optimum internal environmental control because the air may be drawn from either the store or from outside, depending on environmental conditions. The winter mode ventilation and temperature control is particularly effective and provides a major improvement over the prior art. This has been achieved by using simple and inexpensive system components.

The invention is not limited to the embodiments described but may be varied in construction and detail within the scope of the claims. For example, the system may comprise a PLC or other electronic controller to perform automatic control of the flap 12 and of the diffusion plate heater according to temperature sensors and/or internal air flow rate (draught) sensors. The degree of automation depends on the cost-effectiveness, in turn depending on the number of animals housed. Also, the inlet may be controlled to simultaneously draw fresh air from both a store and from outside, depending an environmental control requirements. The invention may be applied to housing of animals other than pigs, such as poultry. Further the exhaust may be mounted in a floor or ceiling of the room.

## Claims

1. An animal house ventilation system comprising:-
an inlet for delivery of fresh air into a room,
an exhaust outlet for delivery of used air to the environment, and
a fan means for drawing air through the inlet and the exhaust, characterised in that,
the inlet comprises:-
means (10, 13) for drawing fresh air from a fresh air store source,
means (10, 11, 16) for drawing fresh air from an external source outside of the house, and
valve means (12) for controlling the fresh air sources.

2. An animal house ventilation system as claimed in claim 1, wherein said means for drawing fresh air from a fresh air store comprises a duct (10) having an attic space opening (13) for location in an attic space (6).

3. An animal house ventilation system as claimed in claim 2, wherein the duct further comprises an external opening for location outside the house, and the valve means comprises means for controlling the extent of fresh air flow from the attic space (6) and through the external opening (16).

4. An animal house ventilation system as claimed in claims 2 or 3, wherein the duct (10) comprises means for mounting in a substantially vertical position with the external opening (16) at an upper end, the attic space opening (13) between the ends, and an internal opening (17) at a lower end for delivery of fresh air into the house.

5. An animal house ventilation system as claimed in any preceding claim, wherein the inlet comprises a diffusion plate (14) mounted to direct air in a generally horizontal direction and a one-way flap (15) to prevent upward escape of internal air through the inlet.

6. An animal house ventilation system as claimed in any preceding claim, wherein the fan (20) is mounted in the exhaust outlet.

7. An animal house (1) comprising a room (7) for housing animals, an attic space (6) above the room, and a ventilation system, characterised in that,
the ventilation system comprises an inlet comprising:-
means (13) for drawing fresh air from the attic space (6),
means (16) for drawing fresh air from outside of the house, and
valve means for controlling fresh air flow to the room (7) from the attic space and from outside.

8. An animal house as claimed in claim 7, wherein the inlet comprises a vertically-mounted duct (10) having an upper opening (16) for drawing fresh air from outside, an intermediate opening (13) for drawing fresh air from the attic space (6), and a lower opening (17) for delivery of fresh air into the room (7).

9. An animal house as claimed in claims 7 or 8, wherein the ventilation system further comprises an exhaust fan (20) mounted in a side wall or a floor of the animal house (1).

10. A method of ventilating an animal house comprising the steps of monitoring internal temperature, and:-
for a low temperature range, drawing fresh air from a fresh air store which is replenished by diffuse flow into the store, and
for a high temperature range, drawing fresh air from the external environment.

11. A method as claimed in claim 10, wherein the fresh air is drawn from an attic space (6) for the low temperature range.

12. A method as claimed in claims 9, 10, or 11, wherein the ventilation flow rate is lower for the low temperature range than for the high temperature range, and the air is heated by a diffusion plate as it enters the room.
